(19) Europäisches Patentamt
European Patent Office
Office européen des brevets

(11) **EP 4 187 438 A1**

(12) **EUROPEAN PATENT APPLICATION**

(43) Date of publication:
**31.05.2023 Bulletin 2023/22**

(21) Application number: **21210516.7**

(22) Date of filing: **25.11.2021**

(51) International Patent Classification (IPC):
***G06K 9/62*** *(2022.01)*      ***G06V 10/774*** *(2022.01)*

(52) Cooperative Patent Classification (CPC):
**G06V 10/774; G06F 18/214;** G06F 18/25;
G06V 10/80; G06V 20/52

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Axis AB
223 69 Lund (SE)**

(72) Inventors:
• **Chen, Jiandan
223 69 LUND (SE)**
• **Xie, Haiyan
223 69 LUND (SE)**

(74) Representative: **AWA Sweden AB
Box 5117
200 71 Malmö (SE)**

Remarks:
Amended claims in accordance with Rule 137(2)
EPC.

(54) **OBJECT SAMPLE SELECTION FOR TRAINING OF NEURAL NETWORKS**

(57) The present invention generally relates to method for selecting object samples (208) for training of a neural network (200) from more than one dataset (202, 204, 206) comprising annotated object samples of at least two object classes ("Class A-D"), the method comprising: determining (S102) an importance score for at least a portion of the annotated object samples; defining (S104) a set of importance score thresholds (210); and selecting (S106) a number of annotated object samples (208) from each object class that fulfill a respective importance score threshold, and that provides the smallest variation of the number of object samples between the object classes, to be used for training of the neural network (200).

Determine an
importance score — S102

Define importance
score thresholds — S104

Select object samples — S106

*Fig. 3*

EP 4 187 438 A1

## Description

TECHNICAL FIELD

The present invention generally relates to the field of camera surveillance, and in particular to a method and control unit for selecting object samples used for training a neural network adapted for detecting objects in a scene.

BACKGROUND

Neural networks have proven to be efficient in detecting and classifying objects in images and video streams. The accuracy in classifying objects depends largely on the underlying training of the neural network which is performed using suitable training data that preferably closely resemble the intended use case.

The training data should represent different object classes, where an object class relates to a class or type of object that is targeted by the neural network.

Generally, a neural network is represented by its architecture that shows how to transform from inputs to outputs. The neural network consists of multiple node layers. The nodes are connected and have been associated with weights and thresholds. The weights and thresholds are learned from training to produce a neural network model.

The training data may include multiple data sets having different properties such as different view angles, different time of day, and different scenarios of a scene. For optimal performance of the neural network for a specific use case, the number of object samples from different datasets to be used in the training should be well controlled.

The training data is often annotated according to the class that a specific object data sample belongs to. Variations in the number of object samples from different classes in the training data may cause class imbalance which has consequences related to poor performance of the neural network for object classes with fewer object samples.

Accordingly, there is room for improvements with regards to training of neural networks.

SUMMARY

In view of above-mentioned and other drawbacks of the prior art, it is an object of the present invention to provide an improved method for selecting object samples that alleviates at least some of the drawbacks of prior art. More specifically, an object of the present invention is to provide a method for selecting object samples that can alleviate the class imbalance problem.

According to a first aspect of the present invention, it is therefore provided a method for selecting object samples for training of a neural network from more than one dataset comprising annotated object samples of at least two object classes. The method comprises: determining an importance score for at least a portion of the annotated object samples; defining a set of importance score thresholds; and selecting a number of annotated object samples from each object class that fulfill a respective importance score threshold, and that provides the smallest variation of the number of object samples between the object classes, to be used for training of the neural network.

The present invention is based upon the realization to adjust the number of samples from each object class based on objects from each class that fulfill the respective importance score threshold. In other words, balancing the number of object samples from each object class to be as equal as possible while fulfilling a respective object importance score requirement for each object class. In this way, a balance between object classes may be obtained.

It was further realized to introduce the importance score threshold as a condition for an object sample to be selected. Object samples that fulfill a specific importance score threshold is considered of sufficiently high quality and relevance for training of the neural network. Thus, the importance score threshold can advantageously be tailored to ensure that the quality and relevance of the selected object samples are acceptable, while still providing an improved balance between object classes.

It can be considered that the result of training a neural network is a neural network model. The neural network model is thus trained for a specific task. Herein the specific task comprises object detection and classification.

The importance score reflects the quality and relevance of an object sample. Each object sample is weighted by its quality and relevance which is reflected in the importance score.

The at least a portion of the annotated object samples is equally interpreted as an amount of the annotated object samples or a number of the annotated object samples and generally means that there may be annotated object samples in the at least one data set that for some reason are not included in the selection process.

By the provision of embodiments herein, the object samples are selected from different object classes in such a way that the imbalance class problem is alleviated and the neural network model performance, after training, may be improved. The performance for object classes having few object samples is particularly improved.

A dataset may be provided in the form of an image from which a plurality of object samples is extractable.

An object sample is defined by its annotations of object class and location in an image. Consequently, the neural network is trained to predict the class and location of an object in an image. Other possible annotations are for example shape, so called polygonal segmentation, and semantic segmentation, and the center coordinate of an object.

In one embodiment, the method may comprise ignoring object samples excluded in the selection of object samples for training of the neural network. This advantageously provides for avoiding training on object samples that may lead to class imbalance or that are related to irrelevant data. Further, it provides for avoiding annotated object samples to be interpreted as background in the training of the neural network, so called negative samples. An object sample that is ignored is masked in the training images. A masked object sample may for example be pixelated or subject to bounding boxes masking. However, more generally, an ignored object sample is not selected and therefore not used, or not included, for training of the neural network. In other words, an ignored sample is excluded for training of the neural network.

In one embodiment, fulfilling the respective importance score threshold may be to exceed or be equal to the respective importance score threshold, the step of selecting may further comprise: for a specified object class, selecting only object samples having an importance score that exceeds or is equal to a minimum importance score threshold that exceeds at least one of the importance score thresholds of the defined set of importance score thresholds. In other words, a minimum importance score threshold may be specifically defined for a specific object class in which is it desirable to guarantee that the object samples are of sufficiently high quality. The minimum importance score threshold is larger than at least one of the other importance score thresholds in the set.

In one embodiment, the step of ignoring may further comprise ignoring object samples in specified object class having an importance score below the minimum importance score threshold in the selection of object samples for training of the neural network.

In one embodiment, the step of defining may further comprise defining more than one set of importance score thresholds, where a first set of importance score thresholds for a first object class is different from a second set of importance score thresholds for a second object class. Advantageously, this allows for tailoring the importance score thresholds for a specific class. As with the minimum importance score threshold, specifically defined sets of importance score thresholds can be used for ensuring the object samples belonging to a given object class are of sufficient quality.

In one embodiment, the method may comprise: for each object class and for each of the importance score thresholds, counting, a number of annotated object samples in the object class that fulfill each of the importance score thresholds, and calculating a standard deviation of the number of counted object samples for each object class and each importance score threshold and wherein the step of selecting may further comprise selecting a combination of object samples from each object class based on the minimum standard deviation among all possible combinations. Using the standard deviation as a measure of the variation of the number of object samples from each class is one efficient way to select a combination of samples from the different object classes with smallest variation between object classes. Instead of using the standard deviation, it is also conceivable to use the variance, being the square of the standard deviation, in an analogous way.

In one embodiment, the counted annotated object samples in each object class that fulfill each of the importance score thresholds may form a group of object samples, wherein calculating the standard deviation comprises calculating the standard deviation of the number of object samples in each group, wherein the combination of groups that provide the minimum standard deviation is selected for training of the neural network. A group may be considered a set, a subset, or a collection of counted annotated object samples in each object class that fulfill each of the importance score thresholds.

In one embodiment, the step of determining may comprise: for each of the annotated object samples, calculating the importance score based on an object sample confidence value and a relevance value, where the object sample confidence value is larger for manually annotated samples than for automatically annotated samples, and the relevance value is higher for a dataset considered more relevant for the use case the neural network is trained for than for datasets more remote from the use case. This advantageously provides for weighting of the object samples according to both relevance and confidence which provides for subsequent accurate selection of object samples. As an example, if the object sample is manually annotated, its confidence value is 1, otherwise the confidence value is a value that indicates how confident a model is in the object classification/detection and is between 0 and 1. The relevance value may be e.g., 1 for the most relevant dataset, and smaller for less relevant data sets, for example 0.7 for a less relevant dataset, and 0.5 for an even less relevant dataset, etc.

In embodiments, the confidence value of automatically annotated samples may be a confidence value obtained from a model or algorithm used for annotating the object samples. The model may be classification model. Another example of a model is an object detection model (a so-called object detector) detecting objects in an image. A further example of a model is a neural network model or a machine learning algorithm. The confidence value indicates how confident the model is in the object classification/detection. The model for automatically annotating samples is not the same model as the neural network for which object samples are selected. However, the model for automatically annotating samples may also be a neural network model.

For example, the model for automatically annotating samples may be an annotation neural network model which is trained from a small dataset, or a-traditional object detection algorithm, such as object detection based on the histogram of oriented gradients.

In one embodiment, calculating the importance score may include adjusting a tuning factor for adjusting the relative importance of the object sample confidence value and a relevance value when calculating the importance score. Thus, the tuning factor provides for balancing the weight between object sample confidence value and a relevance value accordingly.

The number of importance score thresholds may depend on the specific implementation at hand and be tailored to the specific case. However, in embodiments, the set of importance score thresholds comprise at least 3 importance score thresholds. In other embodiments the set of importance score thresholds comprise at least 5 importance score thresholds. In other embodiments the set of importance score thresholds comprise at least 8 importance score thresholds.

Different types of neural networks are conceivable and within the scope of the invention. However, in one preferred embodiment, the neural network is a Convolutional Neural Network (CNN).

Further, the method may comprise providing the selected object samples to the neural network and performing training of the neural network using the selected object samples. The result of training the neural network is a neural network model.

According to a second aspect of the present invention, there is provided a control unit for selecting object samples for training of a neural network from more than one dataset comprising annotated object samples of at least two object classes, the control unit being configured to: determine an importance score for at least a portion of the annotated object samples; acquire a set of importance score thresholds; and select a number of annotated object samples from each object class that fulfill a respective importance score threshold, and that provides the smallest variation of the number of object samples between the object classes, to be used for training of the neural network.

That the control unit acquires the set of importance score thresholds includes that the control unit is configured to determine or define the set of importance score thresholds, or to obtain the set of importance score thresholds from e.g., a memory or a user interface.

Further embodiments of, and effects obtained through this second aspect of the present invention are largely analogous to those described above for the first aspect and the second aspect of the invention.

According to a third aspect of the present invention, there is provided a system comprising an image capturing device for capturing images of a scene including objects, and a control unit configured to operate a neural network model for detecting objects in the scene, the neural network model having been trained on object samples selected according to the method of the first aspect and embodiments thereof.

The image capturing device may be a camera, such as a surveillance camera.

Further embodiments of, and effects obtained through this third aspect of the present invention are largely analogous to those described above for the first aspect and the second aspect of the invention.

According to a fourth aspect of the present invention, there is provided computer program comprising instructions which, when the program is executed by a computer, cause the computer to carry out the method of any of the herein discussed embodiments.

Further embodiments of, and effects obtained through this fourth aspect of the present invention are largely analogous to those described above for the other aspects of the invention.

Further features of, and advantages with, the present invention will become apparent when studying the appended claims and the following description. The skilled addressee realize that different features of the present invention may be combined to create embodiments other than those described in the following, without departing from the scope of the present invention.

BRIEF DESCRIPTION OF THE DRAWINGS

The various aspects of the invention, including its particular features and advantages, will be readily understood from the following detailed description and the accompanying drawings, in which:

Figs. 1 conceptually illustrates a scene being monitored by an image capturing device as an example application of embodiments of the invention;
Fig. 2A conceptually illustrates an overview of neural network model prediction according to embodiments of the invention;
Fig. 2B conceptually illustrates an overview of neural network training according to embodiments of the invention;
Fig. 3 is a flow-chart of method steps according to embodiments of the invention;
Fig. 4 is a flow-chart of method steps according to embodiments of the invention;
Fig. 5 is a flow-chart of method steps according to embodiments of the invention;
Fig. 6 conceptually illustrates data sets with object samples belonging to different object classes;
Fig. 7 is a table that represents the number of object samples that fullfill each of the set of importance score thresholds; and
Fig. 8 conceptually illustrates a control unit that is configured to select object samples according to embodiments of the invention.

DETAILED DESCRIPTION

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person. Like reference characters refer to like elements throughout.

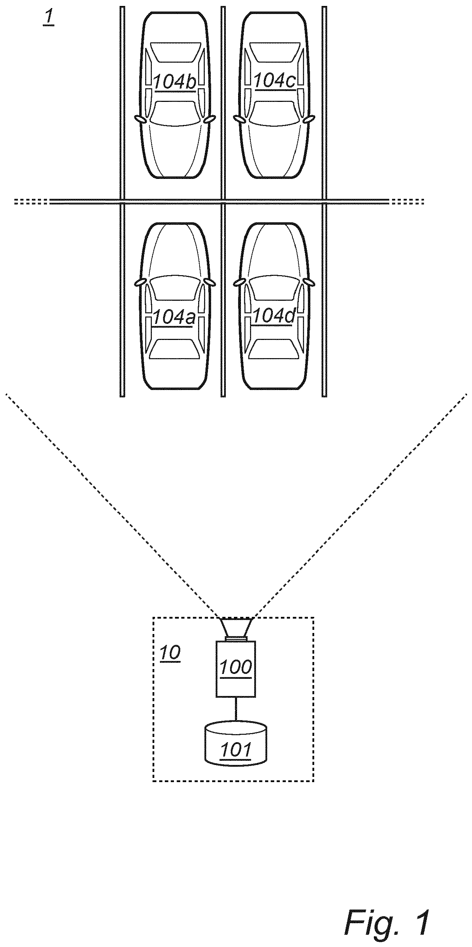

Turning now to the drawings and to fig 1 in particular, there is shown a scene 1 being monitored by an image capturing device 100, e.g., a camera or more specifically a surveillance camera. In the scene 1, there is a set of objects 104a, 104b, 104c, and 104d, that may be for example vehicles in a parking lot.

The camera 100 is continuously monitoring the scene 1 by capturing a video stream or images of the scene 1 and the objects 104a-d therein. The camera 100 and a control unit 101 are part of a system 10, where the control unit 101 may either be a separate stand-alone control unit or be part of the camera 100. It is also conceivable that the control unit 101 is remotely located such as on a server and thus operates as a Could-based service.

The control unit 101 is configured to operate a neural network model for detecting objects 104a-d in the scene 1. For the neural network model to accurately be able to detect objects in the scene 1 and classifying them to be of a specific type, e.g., a vehicle type, a person, etc., it is necessary that the neural network model has been trained for such detection on training data that represent each of a set of object classes. Poor selection of object samples for training of the neural network model for detection of objects from different classes may reduce the performance of the neural network model.

To alleviate this problem, the inventors propose a method for selecting object samples for training of a neural network that provides the smallest variation of the number of object samples between the object classes and which object samples fulfill a respective importance score threshold. This will be described in more detail herein.

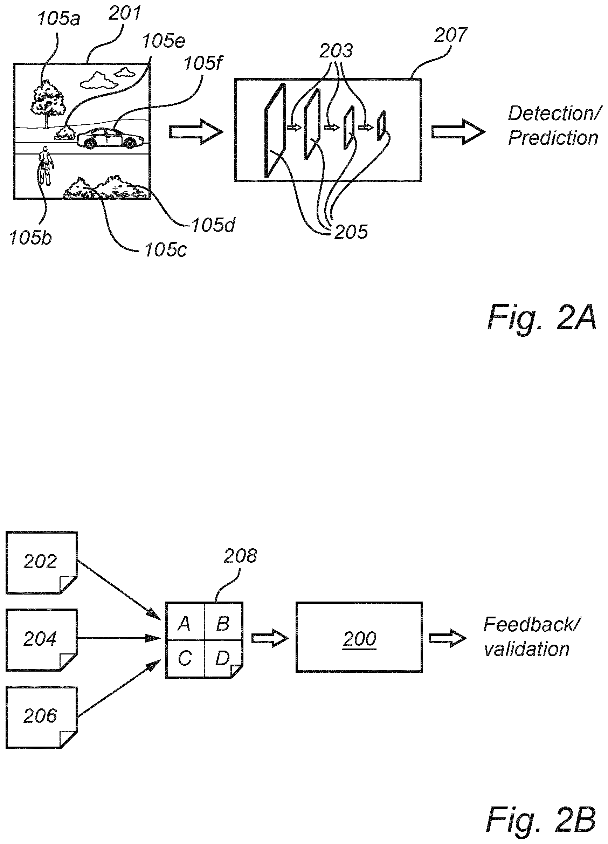

Fig. 2A conceptually illustrates an overview of neural network prediction process. An image 201 acquired by a camera is input into a neural network model 207, here exemplified as a convolutional neural network (CNN) model. The image 201 includes image data indicative of a objects 105a-f belonging to different object classes, e.g., a vehicle 105f, a plant 105c-e, a tree 105a, and a person 105b.

A CNN model operates in ways known to the skilled person. Generally, convolutions of the input are used to compute the output. Connections 203 are formed such that parts of an input layer is connected to a node in the output. In each layer 205 of a convolutional neural network, filters or kernels are applied whereby the parameters of the filters or kernels are learned during training of the convolutional neural network. The operation of neural networks is considered known to the skilled person and will not be described in detail.

Based on its training, the neural network model 207 provides a prediction of the objects detected in the image and their corresponding class.

Fig. 2B conceptually illustrates an overview of neural network training. Here multiple data sets 202, 204, and 206 have been obtained from which object samples for training is to be selected. The data sets 202, 204, and 206, comprise annotated object samples 208 from at least two object classes, here object classes *A,* B, *C,* and D are included. The annotated object samples 208 from the different classes A, B, C, and D are provided to the neural network 200 which feeds back on its predictions and performs validation steps to improve its predictions. More specifically, the neural network 200 backpropagates on its gradient of a loss function to improve model accuracy performance.

From the data sets 202, 204, and 206, annotated object samples 208 from each of the at least two object classes are selected, and subsequently provided for training of the neural network 200.

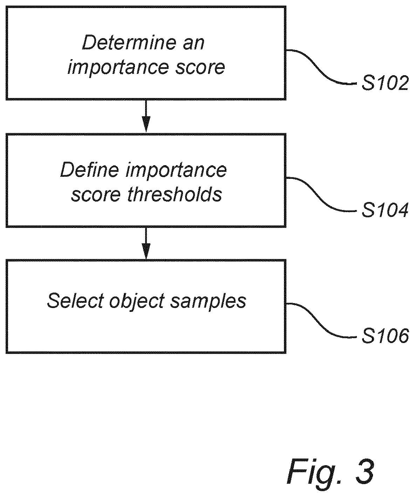

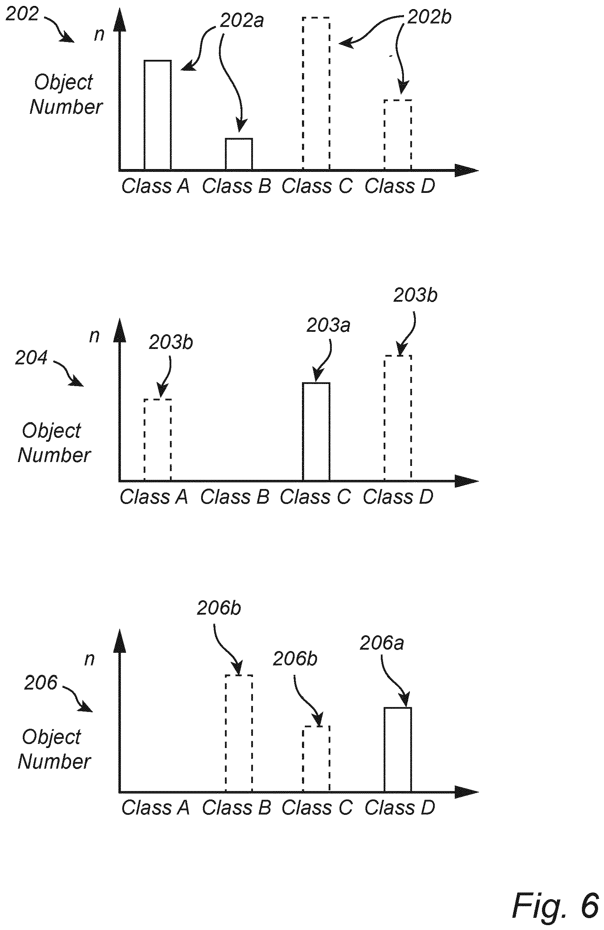

Fig. 3 is a flow-chart of method steps according to embodiments of the invention and Fig. 6 conceptually illustrates object distributions of data sets 202, 204, 206 with object samples belonging to different object classes *A,* B, *C,* D and being manually annotated 202a, 204a, 206a or automatically annotated 202b, 204b, 206b.

The method being for selecting object samples 208 for training of a neural network 200 from more than one dataset 202, 204, 206 comprising annotated object samples of at least two object classes *A,* B, *C, D.*

In step S102, an importance score is determined for at least a portion of the annotated object samples.

The importance score may be determined in different ways. In one possible implementation, the importance score is calculated based on an object sample confidence value and a relevance value. Since a manually annotated object sample 202a is considered annotated with full confidence, e.g., with no uncertainty, the confidence value is larger for manually annotated samples 202a than for automatically annotated samples 202b annotated using a model or an algorithm for annotating the object samples. A higher confidence value generally results in a higher importance score. The confidence value may be a value between 0 and 1.

Further, the relevance value is higher for a dataset considered more relevant for the use case the neural network is trained for than for datasets more remote from the use case. Thus, the closer to the actual use case the more relevant is the data set. If a data set is acquired at a scene similar to the use case type of scene, e.g., a parking lot, then a relatively large relevance value may be set, such as 1 or close to 1. For a less relevant data set, a relevance value of about 0.7 or 0.6 may be set, whereas for an even less relevant data set a relevance value of about 0.4 or 0.5 may be set. The relevance values may be tuned for a specific implementation or application at hand. The relevance value may be a value between 0 and 1.

As an example, for cameras that are deployed at a position with a surveillance view for an indoor environment, the datasets collected for training of the neural network with surveillance views from indoor scenarios are regarded as the most relevant and thus provided the highest relevance value 1.0. Other datasets from indoor environments with other camera view angles, can be provided the relevance value 0.7. Datasets from the outdoor scenarios with surveillance views could be provided the relevance value 0.5, and outdoor with other camera view angles could be provided the relevance value 0.3.

The importance score, $i_s$, for each object sample may be calculated using the formula:

$$i_s = 2\frac{c \cdot w_r}{c + w_r}$$

where c, is the confidence value and $w_r$, is the relevance value for the object sample.

More generally, the importance score may be adjusted to tune the relation between the confidence value and the relevance value. In such case, calculating the importance score includes adjusting a tuning factor, $\beta$, for adjusting the relative importance of the object sample confidence value and a relevance value when calculating the importance score. In this case the importance score, $i_{s\beta}$, for each object sample may be calculated using the formula:

$$i_{s\beta} = (1 + \beta^2)\frac{c \cdot w_r}{\beta^2 \cdot c + w_r}$$

where $\beta$ is the tuning factor.

In one example of using the tuning factor, the confidence value, obtained from a pretraining model or classification algorithms, could have different reliabilities. For example, in case the reliability of a confidence value is relatively low, it is advantageous to adjust the tuning factor β to change the weight of the confidence value to have less impact on the importance score.

Another example, when the neural network is trained for a specific scenario, e.g., an indoor surveillance view, where the camera elevation view angle is large in most cases, and one of the datasets is collected from similar scenarios, this dataset is of high relevance to the use case. In such case, it is advantageous to select more training object samples from the relevant dataset for the neural network to better fit such a specific scenario. Then, as an example, β=2 can be selected, which means the importance of the relevance value is considered two times higher than the importance of the confidence value.

Adjusting the tuning factor ($\beta$) may be performed as an input from a user having knowledge of the use case and the reliability of the confidence values. It is also possible that the tuning factor may be adjusted automatically based on the reliability of the confidence values, i.e., if a low reliability of a confidence values is detected, the turning factor is increased.

With further reference to fig. 3, in step S104, a set of importance score thresholds 210 are defined. The importance score thresholds may be set by a user depending on the use case and the amount of available data. Similarly, the number of importance score thresholds in a set is determined based on the specific application. Purely as an example, in the case of detecting special vehicles, such as ambulances, fire trucks, or other such vehicles, collecting such training object samples is more difficult compared to collecting training object samples for regular private cars. Then the importance score threshold for such object classes (special vehicles) may be set to a lower level, in order to get more training object samples selected for training of the neural network.

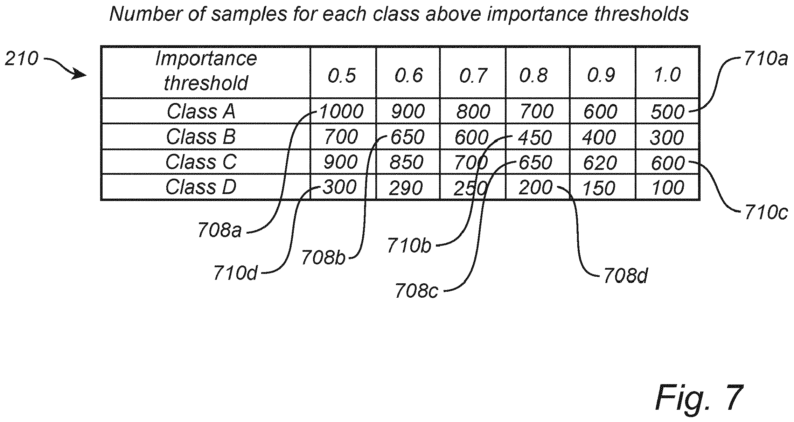

However, generally, the set of importance score thresholds comprise between 3 and 10 importance score thresholds. In the example set of importance score thresholds 210 shown in fig. 7, the set 210 includes 6 importance score thresholds: 0.5, 0.6, 0.7, 0.8, 0.9, and 1.

In step S106, a number of annotated object samples 208 is selected from each object class A B, C, D. The selected object samples 208 fulfill a respective importance score threshold and provide the smallest variation of the number of object samples between the object classes A B, C, D. The selected annotated object samples are to be used for training of the neural network 200.

Turning to fig. 7 which is a table that represents the number of object samples that fulfill each of the set of importance score thresholds 210. Here, in class A, 1000 annotated objects samples fulfill the importance score threshold 0.5. Similarly, 700 object samples of class B, 900 object samples of class C, and 300 object samples of class D fulfill the importance score threshold 0.5. Further, 900 annotated objects of class A, 650 object samples of class B, 850 object samples of class C, and 290 object samples of class D fulfill the importance score threshold 0.6.

Fulfilling the respective importance score threshold 210 is here to exceed or be equal to the respective importance score threshold. Thus, an object sample that exceed or is equal to the importance score threshold 1 will also be included in the object samples that fulfill an importance score threshold lower than 1.

In order to reduce the effect of class imbalance, object samples are selected from each object class, A, B, C, D. The selected object samples fulfill a respective importance score threshold so that the variation of the number of samples from each object class A, B, C, D, is a small as possible.

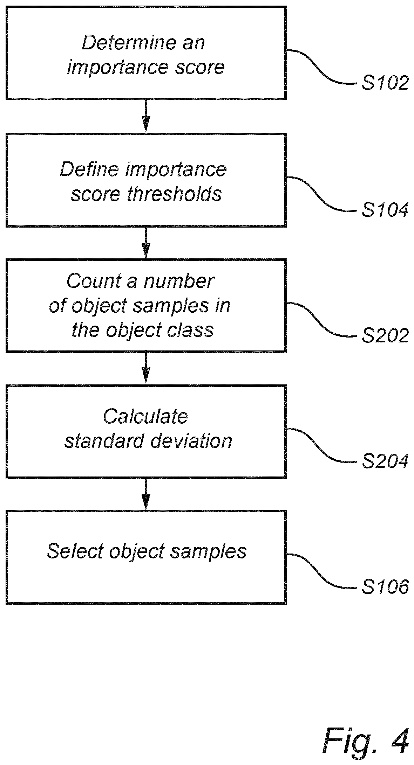

For this, it is advantageous to count, in step S202 in the flow-chart shown in fig. 4, a number of annotated object samples in the object class that fulfill each of the importance score thresholds 210. For example, as described above with reference to the table in fig. 7, count the number of object samples above each importance score threshold for each class from all datasets 202, 204, 206.

Next, in step S204, a standard deviation is calculated of the number of counted object samples for each object class A B, C, D and each importance score threshold 210. The step S106 then includes selecting a combination of object samples from each object class based on the minimum standard deviation among all possible combinations. For example, one combination is the 1000 object samples 708a of object class A that fulfill the importance threshold 0.5, the 650 object samples 708b of object class B that fulfill the importance threshold 0.6, the 650 object samples 708c of object class C that fulfill the importance threshold 0.8, and the 200 object samples 708d of object class D that fulfill the importance threshold 0.8. Thus, one number from each object class A, B, C, D. The standard deviation is calculated for this combination, e.g., 1000, 650, 650, and 200.

The standard deviation for all possible combinations including one number from each object class is calculated, whereas the one combination with the lowest standard deviation is selected. The object samples included in that selection are included in the training of the neural network 200. In this example, the smallest standard deviation is provided by the indicated object samples denoted 710a, 710b, 710c, and 710d.

The standard deviation ($\sigma$) may be given by:

$$\sigma = \sqrt{\frac{\sum(x_i - \mu)^2}{N}}$$

where $x_i$ is the number of counted object samples for each object class, and $\mu$ is the average object sample number of all classes, and N is the number of object classes.

The counted annotated object samples in each object class that fulfill each of the importance score thresholds may be considered to form a group object samples. Thus, calculating the standard deviation in step S204 comprises calculating the standard deviation of the number of object samples in each group. The combination of groups that provide the minimum standard deviation is selected for training of the neural network. For example, the object samples denoted 710a, 710ab, 710c, 710d may be considered a respective group 710a, 710b, 710c, 710d of object samples. A group may equally be considered a set, a subset, or a collection of object samples.

According to step S108, object samples excluded in the selection of object samples for training of the neural network are ignored. Ignored object samples are not used for training of the neural network. In this ways, ambiguous object samples that are not selected, for example the object samples in the group 708a that are not also included in group 710a, are ignored so that they are not incorrectly interpreted as image background.

Implementation of the ignoring may be performed by providing the object sample that is to be ignored by an attribute "ignore". During training the neural network does not include object samples with the "ignore" attribute in its training, neither as positive samples, i.e., annotated object samples, nor as negative samples considered to belong to the image background.

As an example, if the neural network employs so-called anchor boxes and detects an object with attribute "ignore", then the neural network is instructed to not learn from the corresponding region of the image, i.e., the weights or parameters of the neural network will not change based on detections in these regions.

It may be desirable to ensure that object samples of some object classes are of specific quality, and this may be achieved by adding an additional condition given by a minimum importance score threshold for a certain object class. In such case, step S106 further comprises, for a specified object class, selecting only object samples having an importance score that exceeds or is equal to a minimum importance score threshold that exceeds at least one of the importance score thresholds of the defined set of importance score thresholds. For example, the importance score thresholds 710 may be defined for all the object classes. However, if for example Class B is of particular interest and importance, a minimum importance score of e.g., 0.7 may be set. This means that the object samples falling under the importance score threshold lower than 0.7 are not considered for selection.

In case of implementing a minimum importance score, the object samples in specified object class having an importance score below the minimum importance score threshold may be ignored in step S108 in the selection of object samples for training of the neural network. As discussed above, an ignored object sample may not be used during training of the neural network.

Another way to implementing specific importance score thresholds, such as minimum importance score thresholds is to define individual sets of importance score thresholds for different object classes. In such case, the step S104 further comprises defining more than one set of importance score thresholds. A first set of importance score thresholds is defined for a first object class, and this first set of importance score thresholds is different from a second set of importance score thresholds for a second object class. That the sets of importance score thresholds are different means that at least one of the importance score thresholds of the different sets is different, or that the number of importance score thresholds in the different sets are different.

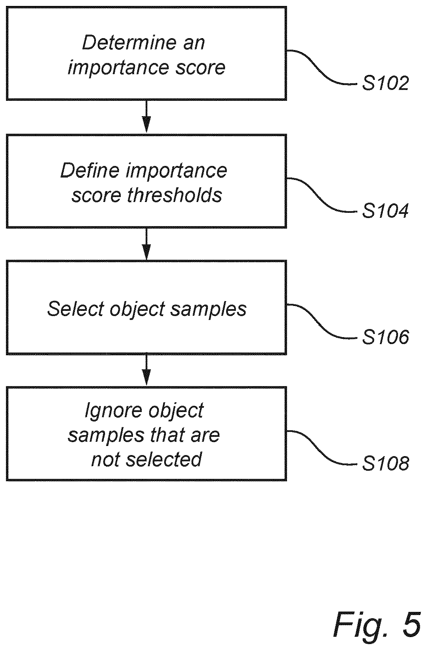

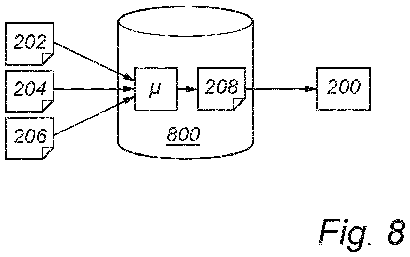

Fig. 8 conceptually illustrates a control unit 800 that is configured to select object samples according to anyone of the herein described embodiments. More specifically, the control unit 800 is configured to perform the steps of the method according to figs. 3-5, and variants thereof discussed herein, generally indicated as algorithm $\mu$.

More specifically, the control unit 800 is configured for selecting object samples 208 for training of a neural network 200 from more than one dataset 202, 204, 206 comprising annotated object samples of at least two object classes *A,* B, *C,* D.

The control unit is configured to determine an importance score for at least a portion of the annotated object samples. This is further discussed above in relation to corresponding method steps.

Further, the control unit 800 is configured to acquire a set of importance score thresholds. The control unit 800 may either define the set of importance score thresholds, or it may obtain or receive the set of importance score thresholds from a memory, or it may receive the set of importance score thresholds as an input from a user interface controllable by a user. Such a user interface includes input devices for a computer that allows a user to send instructions to the control unit 800.

Additionally, the control unit 800 is configured to select a number of annotated object samples 208 from each object class that fulfill a respective importance score threshold, and that provides the smallest variation of the number of object samples between the object classes, to be used for training of the neural network 200.

The control unit 800 illustrated and discussed in relation to fig. 8 may be control unit 800 specifically used for selecting the object samples to be used for the training of the neural network 200. The control unit 800 may also be configured to execute the training of the neural network 200, or the control unit 800 provides the selected object samples for training of the neural network elsewhere. Further, the control unit 800 may equally well be the same control unit as the control unit 101 discussed in relation to fig. 1, thus the control unit operative to run the trained neural network according to a use case. In other possible implementations, the neural network model is loaded to a memory accessible to the control unit 101 after training.

The neural network discussed herein may be a deep neural network such as for example a CNN, although other deep neural networks may be applicable. CNNs are particularly suited for object detection and classification from images.

The control unit includes a microprocessor, microcontrol unit, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontrol unit or programmable digital signal processor mentioned above, the processor may further include computer executable code that controls operation of the programmable device.

The control functionality of the present disclosure may be implemented using existing computer processors, or by a special purpose computer processor for an appropriate system, incorporated for this or another purpose, or by a hardwire system. Embodiments within the scope of the present disclosure include program products comprising machine-readable medium for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. When information is transferred or provided over a network or another communications connection (either hardwired, wireless, or a combination of hardwired or wireless) to a machine, the machine properly views the connection as a machine-readable medium. Thus, any such connection is properly termed a machine-readable medium. Combinations of the above are also included within the scope of machine-readable media. Machine-executable instructions include, for example, instructions and data which cause a general-purpose computer, special purpose computer, or special purpose processing machines to perform a certain function or group of functions.

Although the figures may show a sequence the order of the steps may differ from what is depicted. Also, two or more steps may be performed concurrently or with partial concurrence. Such variation will depend on the software and hardware systems chosen and on designer choice. All such variations are within the scope of the disclosure. Likewise, software implementations could be accomplished with standard programming techniques with rule-based logic and other logic to accomplish the various connection steps, processing steps, comparison steps and decision steps. Additionally, even though the invention has been described with reference to specific exemplifying embodiments thereof, many different alterations, modifications and the like will become apparent for those skilled in the art.

In addition, variations to the disclosed embodiments can be understood and effected by the skilled addressee in practicing the claimed invention, from a study of the drawings, the disclosure, and the appended claims. Furthermore, in the claims, the word "comprising" does not exclude other elements or steps, and the indefinite article "a" or "an" does not exclude a plurality.

**Claims**

1. A method for selecting object samples (208) for training of a neural network (200) from more than one dataset (202, 204, 206) comprising annotated object samples of at least two object classes ("Class A-D"), the method comprising:

determining (S102) an importance score for at least a portion of the annotated object samples; defining (S104) a set of importance score thresholds (210); and

selecting (S106) a number of annotated object samples (208) from each object class that fulfill a respective importance score threshold, and that provides the smallest variation of the number of object samples between the object classes, to be used for training of the neural network (200).

2. The method according to claim 1, comprising: ignoring (S108) object samples excluded in the selection of object samples for training of the neural network (200).

3. The method according to any one of claims 1 and 2, wherein fulfilling the respective importance score threshold is to exceed or be equal to the respective importance score threshold, the step of selecting (S106) further comprises:
for a specified object class, selecting only object samples having an importance score that exceeds or is equal to a minimum importance score threshold that exceeds at least one of the importance score thresholds of the defined set of importance score thresholds.

4. The method according to claim 3 when dependent on claim 2, wherein a step of ignoring (S108) further comprises:
ignoring object samples in the specified object class having an importance score below the minimum importance score threshold in the selection of object samples for training of the neural network (200).

5. The method according to any one of the preceding claims, wherein the step of defining (S104) further comprises:
defining more than one set of importance score thresholds, where a first set of importance score thresholds for a first object class is different from a second set of importance score thresholds for a second object class.

6. The method according to any one of the preceding claims, comprising: for each object class and for each of the importance score thresholds, counting (S202), a number of annotated object samples in the object class that fulfill each of the importance score thresholds, and
calculating (S204) a standard deviation of the number of counted object samples for each object class and each importance score threshold and wherein the step of selecting (S106) further comprises selecting a combination of object samples from each object class based on the minimum standard deviation among all possible combinations.

7. The method according to claim 6, wherein the counted annotated object samples in each object class that fulfill each of the importance score thresholds form a group (710a-d) of object samples, wherein calculating (S204) the standard deviation comprises calculating the standard deviation of the number of object samples in each group, wherein the combination of groups that provide the minimum standard deviation is selected for training of the neural network (200).

8. The method according to any one of the preceding claims, wherein the step of determining (S102) comprises:
for each of the annotated object samples, calculating the importance score based on an object sample confidence value and a relevance value, where the object sample confidence value is larger for manually annotated samples (202a) than for automatically annotated samples (202b), and the relevance value is higher for a dataset considered more relevant for the use case the neural network (200) is trained for than for datasets more remote from the use case.

9. The method according to any one of claims 8, wherein the confidence value of automatically annotated samples is a confidence value obtained from a model or algorithm used for annotating the object samples.

10. The method according to any one of claims 8 and 9, wherein calculating the importance score includes adjusting a tuning factor ($\beta$) for adjusting the relative importance of the object sample confidence value and a relevance value when calculating the importance score.

11. The method according to any one of the preceding claims, wherein the set of importance score thresholds comprise at least 3, or at least 5, or at least 8 importance score thresholds.

12. The method according to any one of the preceding claims, wherein the neural network (200) is a Convolutional Neural Network (CNN)..

13. A control unit (800) for selecting object samples (208) for training of a neural network (200) from more than one dataset (202, 204, 206) comprising annotated object samples of at least two object classes ("Class A-D"), the control unit being configured to:

determine (S102) an importance score for at least a portion of the annotated object samples; acquire (S104) a set of importance score thresholds (210); and select (S106) a number of annotated object samples (208) from each object class that fulfill a respective importance score threshold, and that provides the smallest variation of the number of object samples between the object classes, to be used for training of the neural network.

14. A system (10) comprising an image capturing device (100) for capturing images of a scene (102) including objects (104a-d), and a control unit (101, 800) configured to operate a neural network model (207) for detecting objects in the scene, the neural network model having been trained on object samples selected according to the method of any one of claims 1 to 12.

15. A computer program comprising instructions which, when the program is executed by a computer, cause the computer to carry out the method of any one of claims 1 to 12.

**Amended claims in accordance with Rule 137(2) EPC.**

1. A computer implemented method for selecting object samples (208) for training of a neural network (200) for object detection and classification, the object samples being selected from more than one dataset (202, 204, 206) comprising annotated object samples of at least two object classes ("Class A-D"), the method comprising:

   determining (S102) an importance score for at least a portion of the annotated object samples;
   defining (S104) a set of importance score thresholds (210); and
   selecting (S106) annotated object samples (208) from each object class that fulfill a respective importance score threshold, so that the variation in the number of object samples from each object class is as small as possible, the selected annotated object samples to be used for training of the neural network (200) for object detection and classification.

2. The method according to claim 1, comprising: ignoring (S108) object samples excluded in the selection of object samples for training of the neural network (200) as positive samples and as negative samples.

3. The method according to any one of claims 1 and 2, wherein fulfilling the respective importance score threshold is to exceed or be equal to the respective importance score threshold, the step of selecting (S106) further comprises:
for a specified object class, selecting only object samples having an importance score that exceeds or is equal to a minimum importance score threshold that exceeds at least one of the importance score thresholds of the defined set of importance score thresholds.

4. The method according to claim 3 when dependent on claim 2, wherein a step of ignoring (S108) further comprises:
ignoring object samples in the specified object class having an importance score below the minimum importance score threshold in the selection of object samples for training of the neural network (200).

5. The method according to any one of the preceding claims, wherein the step of defining (S104) further comprises:
defining more than one set of importance score thresholds, where a first set of importance score thresholds for a first object class is different from a second set of importance score thresholds for a second object class.

6. The method according to any one of the preceding claims, comprising: counting (S202), a number of annotated object samples in each object class that fulfill each of the importance score thresholds, and calculating (S204) a standard deviation for all possible combinations of the number of counted object samples, and wherein the step of selecting (S106) further comprises selecting a combination of object samples from each object class based on the minimum standard deviation among all possible combinations.

7. The method according to claim 6, wherein the counted annotated object samples in each object class that fulfill each of the importance score thresholds form a group (710a-d) of object samples, wherein calculating (S204) the standard deviation comprises calculating the standard deviation of the number of object samples in each group, wherein the combination of groups that provide the minimum standard deviation is selected for training of the neural network (200).

8. The method according to any one of the preceding claims, wherein the step of determining (S102) comprises:
for each of the annotated object samples, calculating the importance score based on an object sample confidence value and a relevance value, where the object sample confidence value is larger for manually annotated samples (202a) than for automatically annotated samples (202b), and the relevance value is higher for a dataset considered more relevant for the use case the neural network (200) is trained for than for datasets more remote from the use case.

**9.** The method according to claim 8, wherein the confidence value of automatically annotated samples is a confidence value obtained from a model or algorithm used for annotating the object samples.

**10.** The method according to any one of claims 8 and 9, wherein calculating the importance score includes adjusting a tuning factor ($\beta$) for adjusting the relative importance of the object sample confidence value and a relevance value when calculating the importance score.

**11.** The method according to any one of the preceding claims, wherein the set of importance score thresholds comprise at least 3, or at least 5, or at least 8 importance score thresholds.

**12.** The method according to any one of the preceding claims, wherein the neural network (200) is a Convolutional Neural Network (CNN).

**13.** A control unit (800) for selecting object samples (208) for training of a neural network (200) for object detection and classification, the object samples being selected from more than one dataset (202, 204, 206) comprising annotated object samples of at least two object classes ("Class A-D"), the control unit being configured to:

determine (S102) an importance score for at least a portion of the annotated object samples;
acquire (S104) a set of importance score thresholds (210); and
select (S106) annotated object samples (208) from each object class that fulfill a respective importance score threshold, so that the variation in the number of object samples from each the object class is a s small as possible, to be used for training of the neural network for object detection and classification.

**14.** A system (10) comprising an image capturing device (100) for capturing images of a scene (102) including objects (104a-d), and a control unit (101, 800) configured to operate a neural network model (207) for detecting objects in the scene, the neural network model having been trained on object samples selected according to the method of any one of claims 1 to 12.

**15.** A computer program comprising instructions which, when the program is executed by a computer, cause the computer to carry out the method of any one of claims 1 to 12.

Fig. 1

Detection/
Prediction

*Fig. 2A*

Feedback/
validation

*Fig. 2B*

Determine an
importance score — S102

Define importance
score thresholds — S104

Select object samples — S106

Fig. 3

Determine an
importance score

S102

Define importance
score thresholds

S104

Count a number
of object samples in
the object class

S202

Calculate
standard deviation

S204

Select object samples

S106

*Fig. 4*

Determine an
importance score — S102

Define importance
score thresholds — S104

Select object samples — S106

Ignore object
samples that are
not selected — S108

*Fig. 5*

Fig. 6

Number of samples for each class above importance thresholds

| Importance threshold | 0.5 | 0.6 | 0.7 | 0.8 | 0.9 | 1.0 |
|---|---|---|---|---|---|---|
| Class A | 1000 | 900 | 800 | 700 | 600 | 500 |
| Class B | 700 | 650 | 600 | 450 | 400 | 300 |
| Class C | 900 | 850 | 700 | 650 | 620 | 600 |
| Class D | 300 | 290 | 250 | 200 | 150 | 100 |

210

710a

710c

708a

710d

708b

710b

708c

708d

*Fig. 7*

EP 4 187 438 A1

*Fig. 8*

Europäisches
Patentamt

European
Patent Office

Office européen
des brevets

## EUROPEAN SEARCH REPORT

Application Number

EP 21 21 0516

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KAVITHA SRINIVAS ET AL: "Merging datasets through deep learning", ARXIV.ORG, CORNELL UNIVERSITY LIBRARY, 201 OLIN LIBRARY CORNELL UNIVERSITY ITHACA, NY 14853, 5 September 2018 (2018-09-05), XP081187585, * the whole document * | 1-15 | INV. G06K9/62 G06V10/774 |
| X | DE ARRIBA ARIADNA ET AL: "Merging Datasets for Emotion Analysis", 2021 36TH IEEE/ACM INTERNATIONAL CONFERENCE ON AUTOMATED SOFTWARE ENGINEERING WORKSHOPS (ASEW), IEEE, 15 November 2021 (2021-11-15), pages 227-231, XP034045535, DOI: 10.1109/ASEW52652.2021.00051 [retrieved on 2022-01-12] * the whole document * | 1-15 | |
| X | ASTHANA SHUBHI ET AL: "Cognitive Advisory Agent", 2021 IEEE INTERNATIONAL CONFERENCE ON SMART DATA SERVICES (SMDS), IEEE, 5 September 2021 (2021-09-05), pages 52-54, XP034011430, DOI: 10.1109/SMDS53860.2021.00017 [retrieved on 2021-10-27] * the whole document * | 1-15 | TECHNICAL FIELDS SEARCHED (IPC) G06K G06V |

The present search report has been drawn up for all claims

| Place of search | Date of completion of the search | Examiner |
|---|---|---|
| The Hague | 22 April 2022 | Granger, Bruno |